# EUROPEAN PATENT SPECIFICATION

(11) **EP 3 133 726 B1**
(45) Date of publication and mention of the grant of the patent: **17.10.2018**
(21) Application number: 15181330.0
(22) Date of filing: 18.08.2015
(51) Int. Cl.: H02M 1/32, H02M 3/335, H02M 1/00

(54) **SWITCHMODE POWER SUPPLY WITH REDUCED FOLDBACK POINT**
SWITCHMODE-STROMZUFUHR MIT REDUZIERTEM RÜCKLAUFPUNKT
ALIMENTATION À DÉCOUPAGE AVEC POINT DE REPLI RÉDUIT

(43) Date of publication of application: 22.02.2017
(73) Proprietor: FRIWO Gerätebau GmbH, 48346 Ostbevern (DE)
(72) Inventor: Wenning, Andreas, 48157 Münster (DE)
(74) Representative: Grünecker Patent- und Rechtsanwälte PartG mbB

(56) References cited:
- US-A- 4 017 789
- US-A- 5 012 401
- US-A1- 2003 142 516
- US-A1- 2004 263 139
- US-A1- 2015 207 418

## Description

The present invention relates to a switchmode power supply, in particular to a switchmode power supply which is primary-side regulated. Furthermore, the present invention also concerns a method to control a primary-side switch in a switchmode power supply.

Switchmode power supplies, which are also referred to as control power supplies, are used in numerous electronic devices, so as to produce a low-volt direct voltage needed for provisioning electronic components from a supply voltage. Switch mode power supplies have become accepted in most application cases in comparison to power supply units with power transformer since they have the better efficiency compliant with a certain power class and, in particular, small space requirements. This small space requirement is of essential importance for mobile applications and can be attributed to the fact that instead of the supply voltage, a highfrequency alternating voltage is transformed, which can be in the range of, for example, 20 kHz to 200 kHz. Since the required number of windings of the transformer is reduced inversely proportional to the frequency, it is possible to greatly reduce the copper losses, and the entire transformer becomes substantially smaller.

A switchmode power supply (also referred to as a "power converter") is a power supply or power processing circuit that converts an input voltage waveform into a specified output voltage waveform. DC-DC power converters convert a direct current ("dc") input voltage into a dc output voltage. Controllers associated with the power converters manage an operation thereof by controlling conduction periods of power switches employed therein. Generally, the controllers are coupled between an input and output of the power converter in a feedback loop configuration (also referred to as a "control loop" or "closed control loop").

Typically, the controller measures an output characteristic (e.g., an output voltage, an output current, or a combination of an output voltage and an output current) of the power converter, and based thereon modifies a duty cycle of a power switch of the power converter. The duty cycle "D" is a ratio represented by a conduction period of a power switch to a switching period thereof. Thus, if a power switch conducts for half of the switching period, the duty cycle for the power switch would be 0.5 (or 50 percent). Additionally, as the voltage or the current for systems, such as a microprocessor powered by the power converter, dynamically change (e.g., as a computational load on the microprocessor changes), the controller should be configured to dynamically increase or decrease the duty cycle of the power switches therein to maintain an output characteristic such as an output voltage at a desired value.

Power converters designed to operate at low power levels typically employ a flyback power train topology to achieve low manufacturing costs. A power converter with a low power rating designed to convert ac mains voltage to a regulated dc output voltage to power an electronic load such as a printer, modem, or personal computer is generally referred to as a "power adapter" or an "ac adapter."

Power conversion efficiency for power adapters has become a significant marketing criterion, particularly since the publication of recent Department of Energy (DoE) specifications that require a power conversion efficiency of power adapters for personal computers to be at least 50 percent at very low levels of output power. The "One Watt Initiative" of the International Energy Agency is another energy saving initiative to reduce appliance standby power to one watt or less. These efficiency requirements at very low output power levels were established in view of the typical load presented by a printer in an idle or sleep mode, which is an operational state for a large fraction of the time for such devices in a home or office environment. A challenge for a power adapter designer is to provide a high level of power conversion efficiency (i.e., a low level of power adapter dissipation) over a wide range of output power.

US 5,012,401 A relates to switching power supplies for electronic circuits and more particularly to foldback current limiting in such power supplies. This document discloses a switching power supply comprising a transformer the secondary side of which communicates a feedback signal to a current limiter. The current limiter consists essentially of resistor and diode elements and is operative in response to the feedback signal and a reference voltage signal received from a pulse-width modulator to prevent or permit current flow through the diode.

US 2015/0207418 A1 discloses a primary-side regulation (PSR) power supply device which includes a power switch; an auxiliary wiring from which an auxiliary voltage that depends on an output voltage is generated during a turn-off period of the power switch and being provided in a primary side; a clamping circuit clamping a voltage corresponding to the auxiliary voltage to a predetermined voltage; a voltage follower decreasing the sense voltage according to a decrease of the auxiliary voltage; and a switch control circuit controlling a switching operation of the power switch by using the sense voltage.

US 2004/0263139 A1 relates to a switching type dc-dc converter which is adapted to set a protective reference current level lower for a decreased output voltage, and stop the switching control signal supplied to a switching transistor circuit when the detected current level exceeds the protective reference current level. In addition, in case where the output voltage declines due to, for example, a circuit failure such as short-circuiting, the switching period of the switching transistor circuit is extended. Thus, the switching type dc-dc converter is provided with a foldback current limiting type protection characteristic through reduction of the protective reference current level and extension of the switching period of cycle.

From US 2003/0142516 A1 an apparatus and method are known for reducing the voltage stress in a single-stage single-switch (SSSS) converter by modulating the predetermined operating frequency of the converter lower responsive to increasing voltage stress. A control circuit and an associated cooperable frequency setting capacitance and resistance are coupled to the primary circuit and the secondary circuit of the SSSS converter via a switch. A frequency foldback device is coupled to CT or RT and cooperable therewith to lower bus voltage stress by modulating the switch frequency. The operating frequency is modulated (i.e. reduced) from the predetermined operating frequency upon detection of a voltage threshold transition.

US 4,017,789 A relates to a constant potential power supply with current overload protection having a series switching regulator including a series switching circuit controlled by both a Schmitt-trigger circuit controlled by an output voltage detector to maintain the output load voltage within a predetermined range during normal operation and a current overload protection circuit having a foldback characteristic which operates when the output current goes above a predetermined value. The Schmitt-trigger circuit is actuated by a signal from an output voltage detection circuit when the output load potential decreases below a certain value to enable the series switching circuit to conduct current to the load from an input voltage source and is disabled as the output load potential goes above a certain value. After actuation of the series switching circuit and until it is disabled, charging current passes into an integrating capacitor. This integrating capacitor is coupled across the load, and discharges through it when the series switching circuit is cut-off. The current overload protection circuit, which senses the output load current, exclusively controls and enables and disables the series switching circuit of the regulator when the output current increases above a predetermined level. The particular arrangement between the series switching circuit and the current overload protection circuit is such that the current overload circuit is not within the output voltage detection loop thereby improving the overall regulation of the constant potential power supply and provides significant current overload protection thereto.

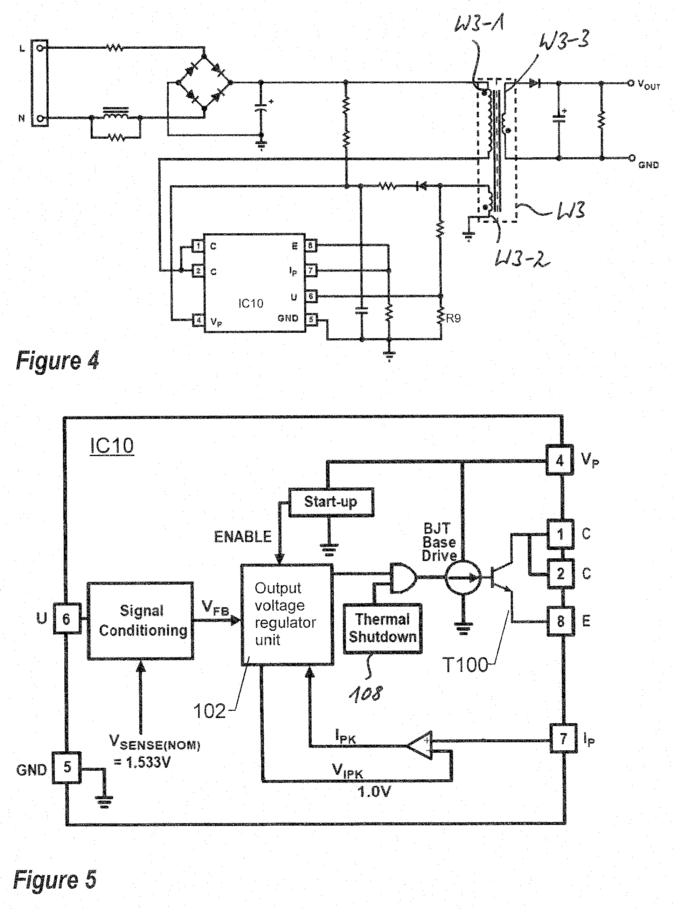

Fig. 4 schematically illustrates a simplified example of a conventional switchmode power supply comprising a transformer W3, a primary-sided switch, and a control circuit for controlling the primary-sided switch and for rectifying and filtering the input voltage. The primary-sided switch and the main components of the control circuit are integrated within a monolithic integrated circuit IC10. Fig. 5 shows as a detail of Fig. 4 the most important components of the integrated circuit IC10.

At the input terminals L, N an alternating input voltage, such as mains power, is applied. The alternating input voltage is rectified and applied to a primary-side main winding W3-1. A switch T100 that his arranged within the integrated circuit IC10 is operable to interrupt a current flow through the primary-side main winding W3-1. Caused by the operation of the primary-side switch T100 a secondary-side voltage is induced in a secondary-side main winding W3-3, which is filtered and output as a secondary-side output voltage Vₒᵤₜ.

For controlling the primary-side switch T100 in response to the secondary-side output voltage Vₒᵤₜ, a feedback signal has to be supplied to the integrated circuit IC10. As shown in Fig. 5, an auxiliary voltage is applied to terminal U from which a feedback voltage V_{FB} for the logic circuitry of the output voltage regulator unit 102 can be derived. In the arrangement shown in Fig. 4, the auxiliary voltage is generated by means of a primary-side auxiliary winding W3-2 which is inductively coupled with the secondary-side main winding W3-3, so that after opening of the primary-side switch T100 the auxiliary voltage is induced as a function of the secondary-side output voltage Vₒᵤₜ.

Alternatively (not shown in figures), an auxiliary voltage that can be used for feedback may also be generated by any other suitable feedback means, e. g. derived from the secondary side via an opto-coupler.

The logic circuitry of the output voltage regulator unit 102 performs the regulating of the switch T100 by providing a control signal for driving the control input of the primary-side which T100. For start-up and operation, the output voltage regulator unit 102 requires a supply voltage which is applied at terminal V_{P} of the integrated circuit IC10. At terminal IP, a signal is input which is indicative of the primary current, i. e. the current flowing in the primary-side main winding W3-1. Moreover, the integrated circuit IC10 further comprises a thermal shutdown unit 108 which monitors the temperature in the integrated circuit IC10 and initiates a shutdown in case of overheating.

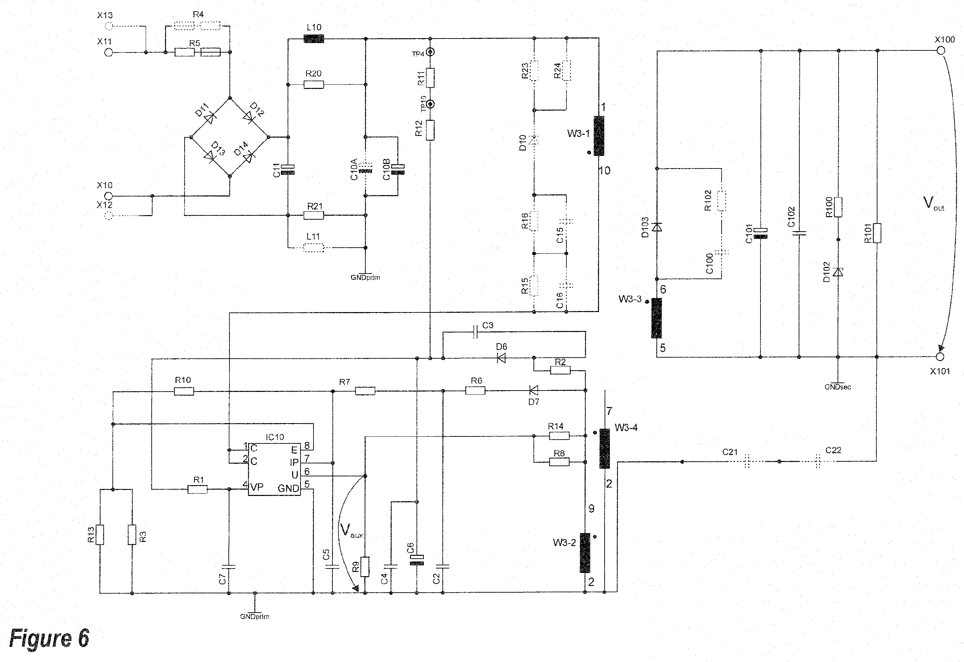

Fig. 6 shows a more detailed example of the architecture of a conventional switchmode power supply using the integrated circuit IC10 of Fig. 5. Components which are shown with broken lines are optional and the respective components are not assembled if they are not needed. Exemplary values are listed for the individual circuit components in Table 1 at the end of this specification.

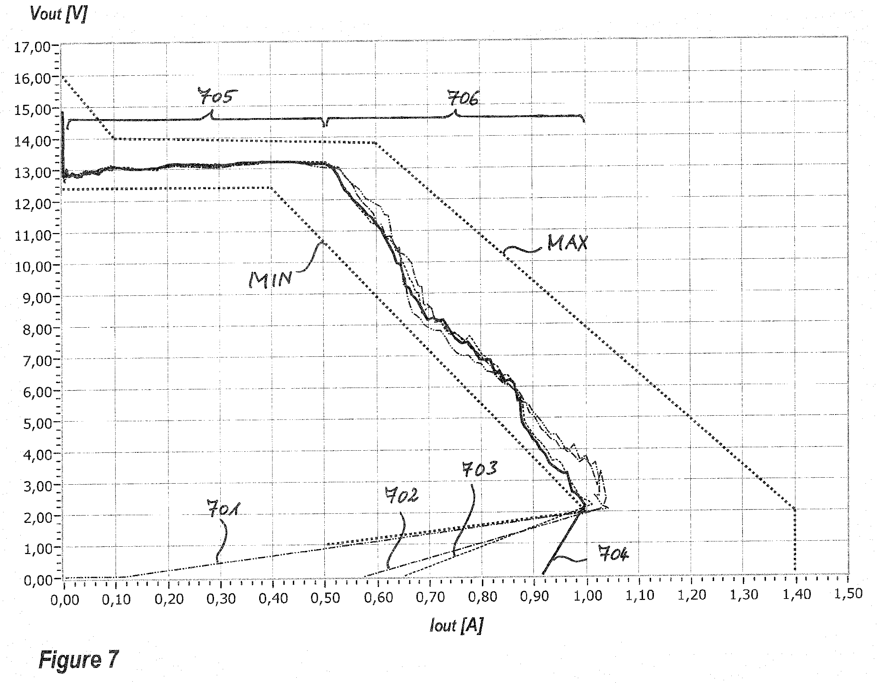

As can be seen from this circuit diagram, the auxiliary voltage Vₐᵤₓ across a voltage sensing resistor R9 is applied to the terminal U of the integrated circuit IC10. The voltage sensing resistor R9 forms a voltage divider in series with the parallel arrangement of resistors R14 and R8. This voltage divider is coupled in parallel to the auxiliary primary-side winding W3-2. Using the auxiliary voltage Vₐᵤₓ as an indicator for the secondary-side output voltage Vₒᵤₜ allows the logic circuitry of the output voltage regulator unit 102 to perform control of the primary-side switch in a way that the output characteristics shown in Fig. 7 is achieved.

Fig. 7 shows the output voltage Vₒᵤₜ as a function of the output current Iₒᵤₜ for different values of the input voltage. In particular, curve 701 was measured for an input voltage of 90 V, curve 702 for an input voltage of 120 V, curve 703 for an input voltage of 230 V, and curve 704 for an input voltage of 264 V. The lower and upper margins MIN, MAX represent an example of tolerance limits that have to be met for a typical low power application. As can be seen from Fig. 7, starting from the no-load open circuit status (Iₒᵤₜ is zero), the output voltage Vₒᵤₜ first remains at around 13 V in a voltage control mode (range 705). For current values above approximately 0.5 A the switchmode power supply operates in the current control mode (range 706). In the current control mode the primary-side switch T100 is controlled so that always a constant power is output at the output terminals. In other words, the output voltage Vₒᵤₜ is decreased with increasing output current Iₒᵤₜ.

When the output voltage Vₒᵤₜ reaches a threshold value of approximately 2 V, the primary-side switch is controlled so that the output current Iₒᵤₜ decreases with increasing output voltage Vₒᵤₜ. This particular way of current limiting is called foldback current limiting, sometimes also reentrant current limiting.

As this is generally known, foldback current limiting is a current limiting feature which is provided as an overload protection for power supplies. When the load attempts to draw overcurrent from the supply, foldback reduces both the output voltage and current to values well below the normal operating limits. Under a short circuit, where the output voltage has reduced to zero, the current is typically limited to a small fraction of the maximum current. The prime purpose of foldback current limiting in switchmode power supplies is to reduce the power dissipation in the load under fault conditions, which can reduce the risk of fire and heat damage.

As may be derived from Fig. 7, the starting point of the foldback current limiting lies at a value of the output voltage of approximately 2 V. However, for some applications this starting point is too high and it would be desirable to shift the starting point for the foldback current limiting closer to an output voltage of 0 V without having to modify the regulator unit 102 provided in the integrated circuit IC10.

Consequently, there is a need for an improved switchmode power supply that exhibits a lower voltage starting point for a foldback current limiting.

This object is solved by the subject matter of the independent claims. Advantageous embodiments of the present invention are the subject matter of several dependent claims.

According to the present invention, a switch mode power supply comprises a transformer having a primary-side main winding and a secondary-side main winding, a primary-side switch for interrupting a primary-side current that flows through the primary-side main winding, a feedback unit which is operable to generate an auxiliary voltage that is a function of a secondary-side output voltage, and a control circuit for controlling said primary-side switch. The control circuit comprises an output voltage regulator unit that is operable to reduce the primary-side current flow in response to a sensed value of the auxiliary voltage and to perform a foldback current limiting.

The idea underlying the present invention is to provide a voltage regulation deactivating unit that is operable to increase the sensed value of the auxiliary voltage received by the output voltage regulator unit, when the output voltage reaches a defined lower threshold. In other words, the auxiliary voltage applied to the output voltage regulator unit is not exactly mirroring the actual output voltage anymore, but pretends to still be on a higher level. As a consequence, the output voltage regulator unit enters the foldback current limiting mode for lower values of the output voltage than defined by the fixed settings of the integrated circuit.

The advantage of such a modification firstly can be seen in the fact that existing integrated circuits with output voltage regulator units can be retro-fitted in order to be adapted to new application environments. Moreover, by allowing an interruptible coupling between the voltage regulation deactivating unit and the remaining circuitry, the same switchmode power supply can be used for different applications, exhibiting different foldback starting points, without having to change the layout of the electronic circuitry or the hardware and settings of the output voltage regulator unit.

According to an advantageous embodiment of the present invention, the feedback unit comprises a first primary-side auxiliary winding which is inductively coupled with the secondary-side main winding, so that after the opening of the primary-side switch the auxiliary voltage is induced as a function of the secondary-side output voltage. Such an auxiliary winding provides a particularly simple and accurate way of coupling back the information about the secondary-side output voltage to the primary side. However, the principles of the present invention can also be applied to a situation where the feedback voltage that is applied to the output voltage regulator unit is generated by any other suitable feedback unit. For instance, an opto-coupler may also be used to provide the auxiliary voltage needed as a feedback from the secondary side. Hence, although not shown in the figures, a feedback by means of an opto-coupler or the like is also intended to be comprised by the present invention.

According to a further advantageous embodiment, the output voltage regulator unit receives the sensed value of the auxiliary voltage across a first voltage sensing resistor. The voltage regulation deactivating unit is connected in parallel to the first voltage sensing resistor. In this manner, the voltage regulation deactivating unit can be controlled to influence the value of the voltage sensing resistor depending on the output voltage in a particularly precise way. In particular, the first voltage sensing resistor may form a voltage divider with a parallel arrangement of two voltage divider resistors. This voltage divider may be coupled in parallel to the first primary-side auxiliary winding for providing the auxiliary voltage to the output voltage regulator unit.

In an advantageous implementation of the present invention, the voltage regulation deactivating unit comprises a second voltage sensing resistor and a first controllable switch. The second voltage sensing resistor and the first controllable switch are connected in series, so that by controlling the controllable switch the second voltage sensing resistor can be coupled in parallel to the first voltage sensing resistor and can be decoupled again. Thereby the auxiliary voltage is lying across either only the first voltage sensing resistor or across a parallel connection of the first and second voltage sensing resistors. Accordingly, by choosing an appropriate value for the second voltage sensing resistor, the auxiliary voltage lying across the parallel connection of the two resistors is higher than for the case where only the first voltage sensing resistor is active. The output voltage regulator unit perceives a higher output voltage level and consequently defers starting the foldback current limiting mode until a lower actual output voltage value.

Advantageously, a control terminal of the first controllable switch is connected to the first primary-side auxiliary winding for controlling the first controllable switch as a function of the secondary-side output voltage. In this manner it can be achieved that-depending on the secondary-side output voltage-either the actual auxiliary voltage or an enhanced value of the auxiliary voltage is used as a feedback voltage by the output voltage regulator unit. Advantageously, the first controllable switch is formed by a metal oxide semiconductor field effect transistor (MOS FET).

According to a further advantageous embodiment, the voltage regulation deactivating unit further comprises a series connection of a second voltage divider resistor with a parallel RC-circuit, the series connection being connected in parallel with said first primary-side auxiliary winding. The control terminal of the first controllable switch is connected to a node between the second voltage divider resistor and the parallel RC-circuit.

This circuit implementation has the advantage that the secondary-side output voltage can easily be mirrored to the primary side for determining when the voltage regulation deactivating unit should become active. For output values above a threshold value that induce a voltage at the second voltage divider resistor which is above the gate threshold voltage of the MOS FET, the MOS FET is conductive and the parallel connection of the first and second voltage sensing resistors determines the voltage sensed as the auxiliary voltage by the output voltage regulator unit. This parallel connection may for instance have a resistance value of 8345 Ω.

With increasing load at the output of the switchmode power supply the output voltage decreases and consequently the auxiliary voltage at some point drops below the gate threshold voltage of the MOS FET. At this point, the MOS FET becomes no longer conductive and consequently only the first voltage sensing resistor is determining the voltage applied to the output voltage regulator unit. For instance, the first voltage sensing resistor may have a value of 27.4 kΩ. Consequently, the voltage across the first voltage sensing resistor is increased by approximately a factor 3 compared to the case where the parallel connection of the first and second voltage sensing resistors is active.

In the conventional switchmode power supply shown in Fig. 4, the supply voltage for powering the integrated circuit is derived from the first auxiliary winding. However, when using the voltage regulation deactivating unit according to the present invention, this supply voltage may not be sufficient for operating the switchmode power supply down to output voltages of around 1 V. Therefore, the present invention according to a further advantageous embodiment provides a supply voltage stabilizing unit that ensures a sufficiently stable supply voltage for the integrated circuit. In particular, the switchmode power supply comprises a second primary-side auxiliary winding which is inductively coupled with the secondary-side main winding, wherein the supply voltage stabilizing unit is connected to the second primary-side auxiliary winding to derive from a sufficiently high and stable supply voltage.

Thus, for secondary-side output voltages that are below a certain limit, the integrated circuit's power supply from the first auxiliary winding is supplemented and stabilized by power derived from a second primary-side auxiliary winding. The supply voltage for the integrated circuit is thereby stabilized over all load conditions and input voltage ranges.

According to an advantageous embodiment of the present invention, the supply voltage stabilizing unit comprises a bipolar transistor that is connected with a collector terminal to the second primary-side auxiliary winding, with a base terminal to a ground potential, and provides active emitter terminal the stabilized supply voltage to the integrated circuit.

This implementation offers the advantage of reliably keeping the integrated circuit's supply voltage above the under-voltage lockout threshold below which the integrated circuit no longer operate.

According to a further advantageous embodiment, a feedback resistor is connected between the collector terminal and the base terminal of the bipolar transistor and the base terminal is connected to the ground via a reference voltage diode. Thus, the supply voltage stabilizing unit works as a linear regulator which accurately provides the stabilized supply voltage with low energy losses.

The present invention further relates to a method to control a primary-side switch in a switchmode power supply with a transformer, which has a primary-side main winding and a secondary-side main winding. The method comprises the steps of controlling the primary-side switch to interrupt a primary-side current that flows through the primary-side main winding, generating an auxiliary voltage that is a function of a secondary-side output voltage, sensing the auxiliary voltage on a voltage measurement input of a regulator unit, and comparing the sensed auxiliary voltage to a voltage reference value, and performing a foldback current limiting in case the sensed auxiliary voltage falls below the voltage reference value. When the secondary-side output voltage reaches a defined lower threshold, the auxiliary voltage, before being applied to the voltage measurement input of the regulator unit, is increased by a voltage regulation deactivating unit, so that the regulator unit performs the foldback current limiting step at reduced values of the secondary-side output voltage.

As already mentioned above, the switchmode power supply according to the present invention can operate closer to the short-circuit secondary-side output voltage than a conventional switchmode power supply without having to provide any modifications at the integrated circuit comprising the output voltage regulator unit. Moreover, by allowing a decoupling of the voltage regulation deactivating unit, the same hardware can be used for application environments requiring a higher or a lower foldback current limiting starting point.

The method according to the present invention can advantageously use as a feedback unit an auxiliary voltage induced in a primary-side auxiliary winding. Alternatively, also other feedback techniques, such as an opto-coupler, can be employed.

According to the present invention, the auxiliary voltage applied to the voltage measurement input of the regulator unit is increased by at least a factor 3. Consequently, the foldback current limiting step is performed only for values of the secondary-side output voltage of less than 1 V. Without using the inventive voltage regulation deactivating unit, the foldback current limiting step is performed starting from secondary-side output voltages of less than 2 V. Such a lower starting point for the foldback current limiting step may for instance be required when in a portable device using rechargeable battery packs the amount of battery cells is reduced.

The accompanying drawings are incorporated into the specification and form a part of the specification to illustrate several embodiments of the present invention. These drawings, together with the description serve to explain the principles of the invention. The drawings are merely for the purpose of illustrating the preferred and alternative examples of how the invention can be made and used, and are not to be construed as limiting the invention to only the illustrated and described embodiments. Furthermore, several aspects of the embodiments may form-individually or in different combinations-solutions according to the present invention. The following described embodiments thus can be considered either alone or in an arbitrary combination thereof. Further features and advantages will become apparent from the following more particular description of the various embodiments of the invention, as illustrated in the accompanying drawings, in which like references refer to like elements, and wherein:
- **FIG. 1**: shows a schematic representation of a switchmode power supply according to the present invention;
- **FIG. 2**: shows an example of a detailed circuit implementation of a switchmode power supply according to the present invention;
- **FIG. 3**: shows an output characteristic achieved with the circuit arrangement according to Fig. 2;
- **FIG. 4**: shows a schematic representation of a conventional switchmode power supply comprising a foldback output current limiting;
- **FIG. 5**: shows a simplified block diagram of an integrated circuit used in the architectures of Fig. 1, 2, 4, and 6;
- **FIG. 6**: shows an example of a detailed circuit implementation of a conventional switchmode power supply;
- **FIG. 7**: shows an output characteristic achieved with the circuit arrangement according to Fig. 6.

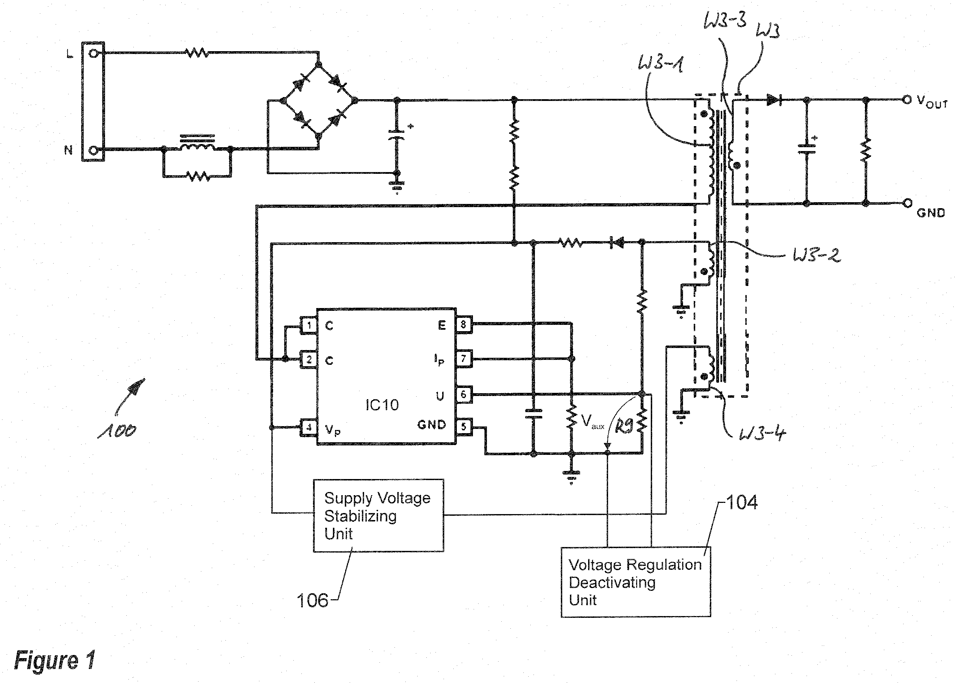

The present invention will now be further explained referring to the Figures, and firstly referring to Fig. 1. The switchmode power supply 100 according to the present invention as shown in the example of Fig. 1 can be formed using essentially the same components as discussed with reference to Fig. 4. In particular, the integrated circuit IC10 may also be the one explained with reference to Fig. 5.

According to the present invention, the control circuit additionally comprises a voltage regulation deactivating unit 104. The voltage regulation deactivating unit 104 is connected in parallel to a voltage sensing resistor R9. The voltage across the resistor R9 is the sensed auxiliary voltage Vₐᵤₓ that is applied to terminal U of the integrated circuit IC10 and is indicative of the secondary-side output voltage Vₒᵤₜ. From the auxiliary voltage Vₐᵤₓ (after an optional signal conditioning step) a feedback voltage V_{FB} is generated for being input into the output voltage regulator unit 102 shown in Fig. 5.

According to the present invention, the voltage regulation deactivating unit 104 may form an additional resistance in parallel to the voltage sensing resistor R9 until the secondary-side output voltage Vₒᵤₜ drops below a predefined threshold. In case the secondary-side output voltage falls below this threshold, this additional resistance may be disconnected, so that only the voltage sensing resistor R9 determines the auxiliary voltage Vₐᵤₓ. According to the present invention, the voltage sensing resistor R9 has a lower resistance value than the combined resistance value of voltage sensing resistor R9 and the additional resistance presented by the voltage regulation deactivating unit 104.

Consequently, following the general theory of voltage dividers, the auxiliary voltage Vₐᵤₓ applied to terminal U of the integrated circuit IC10 represents a larger fraction of the induced voltage across the auxiliary winding W3-2. The output voltage regulator unit 102 therefore receives a higher voltage as the feedback voltage V_{FB} and accordingly starts with the foldback output current limiting at a lower actual value of the secondary-side output voltage Vₒᵤₜ.

Optionally, the switchmode power supply 100 according to the present invention may further comprise a second primary-side auxiliary winding W3-4 and a supply voltage stabilizing unit 106 which is operable to derive from the second primary-side auxiliary winding W3-4 a stabilized supply voltage to the integrated circuit IC10, alternatively or in addition to the supply voltage provided from the first primary-side auxiliary winding W3-2.

By providing the supply voltage stabilizing unit 106 and the second primary-side auxiliary winding W3-4 the integrated circuit IC10 can be powered over a much larger range of input voltages and load conditions, at the same time reducing power losses. An under-voltage lockout of the integrated circuit IC10 can be avoided until much lower values of the secondary-side output voltage Vₒᵤₜ compared to conventional switchmode power supplies.

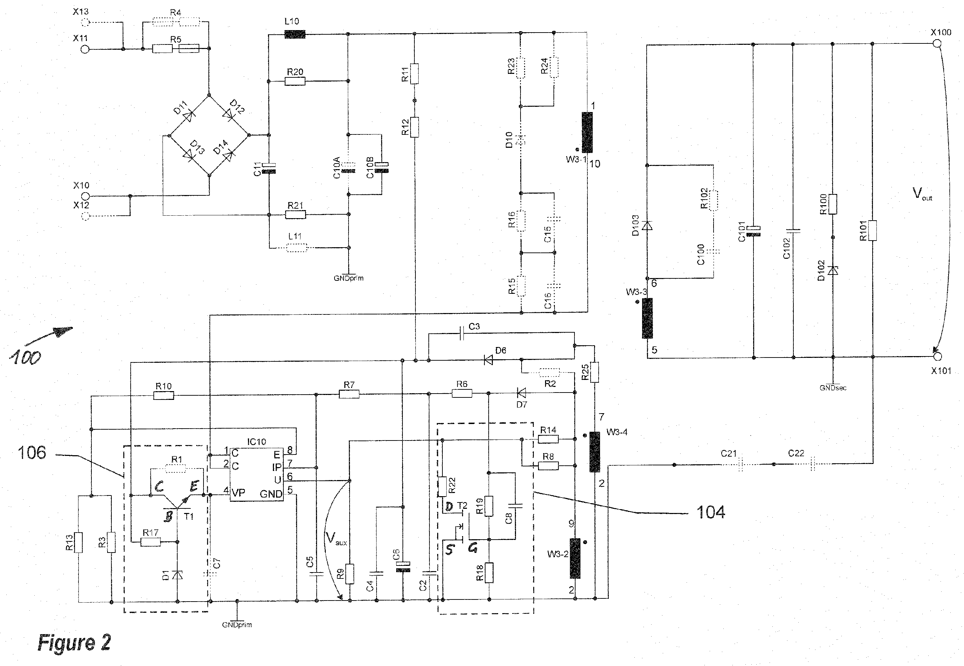

Fig. 2 shows an advantageous exemplary embodiment of a switchmode power supply 100 according to the present invention. Components which are represented by broken lines can be added optionally, but preferably are not assembled according to the present invention. Exemplary values are listed for the individual circuit components in Table 1 at the end of this specification.

The integrated circuit IC10 advantageously has a structural design as shown in Fig. 5. As explained above with reference to Fig. 1, the auxiliary voltage Vₐᵤₓ that is input into the integrated circuit IC10 lies across the first sensing resistor R9. The first sensing resistor R9 is part of a voltage divider that is arranged across the first primary-side auxiliary winding W 3-2. The voltage divider further comprises the resistors R8 and R14, which are connected in parallel.

According to the present invention, the voltage regulation deactivating unit 104 comprises a series connection of a controllable switch T2 and a second voltage sensing resistor R22. Preferably, the controllable switch T2 is formed by an MOS FET.

This series connection is connected in parallel to the first voltage sensing resistor R9. It can be seen that when transistor T2 is conducting, the second voltage sensing resistor R22 is connected in parallel to the first voltage sensing resistor R9. Consequently, the auxiliary voltage Vₐᵤₓ applied to terminal U of the integrated circuit IC10 lies across a parallel connection of the first and second voltage sensing resistors R9, R22. On the other hand, when the transistor T2 is not conducting, only the first voltage sensing resistor R9 is active.

When assuming the representative values given in Table 1, namely R9=27.4 kΩ and R22=11.3 kΩ, the parallel connection of these resistors has a combined resistance of approximately 8 kQ (the exact value taking into account all parasitic effects is 8345 Ω). When further assuming that the resistors R14 and R8 according to Table 1 have the values 110 kQ and 118 kΩ, respectively, it can be derived that their parallel connection R14 || R8 has a value of about 57 kΩ. Consequently, when considering the voltage divider formed by R14 || R8 in series with R9, at the first voltage sensing resistor R9 an auxiliary voltage is present which is a three times higher fraction of the voltage across the first primary-side auxiliary winding W3-2, compared to the situation where resistor R22 is connected in parallel to resistor R9. In other words, the integrated circuit IC10 receives an auxiliary voltage Vₐᵤₓ which is increased by approximately the factor 3 when the transistor T2 is not conducting, compared to the situation where transistor T2 is conducting.

According to the present invention, a gate terminal G of the transistor T2 is connected via a second voltage divider and a diode D7 to the first primary-side auxiliary winding W3-2. When the load on the switchmode power supply is increased, the voltage occurring at the node between the diode D7 and the resistor R6 decreases. Consequently, also the overall voltage at the second voltage divider formed by the resistor R18 and the RC-circuit R19, C8 declines. When the voltage at the gate terminal G of transistor T2 is falling below the gate threshold voltage of the MOS FET T2 (usually 2 V), the MOS FET T2 does not become conductive anymore. Consequently, the second voltage sensing resistor R22 is no longer connected actively in parallel to resistor R9 in this lower range of the secondary-side output voltage Vₒᵤₜ.

Thereby, eventually, the starting point of the foldback current limiting is shifted to a lower value of the secondary-side output voltage Vₒᵤₜ. Typically, the voltage regulation deactivating unit according to the present invention and as shown in Fig. 2 reaches a foldback starting point of around 0.6 V.

The voltage divider which is connected to the gate terminal G of the MOS FET T2 comprises an RC-circuit R19, C8. The capacitor C8 is needed because the RC-combination formed by capacitor C2 and resistor R6 causes a voltage drop and consequently voltage fluctuations in case of a low load at the output. The RC-circuit R19, C8 operates as a filter and filters the voltage applied to the gate terminal G of transistor T2. This is important for cases where the discharging time is very short, in particular for a very low output load. Voltage fluctuations at the output under open-circuit conditions or with very low output load, the so-called "voltage bouncing" of the secondary-side output voltage Vₒᵤₜ, can be avoided.

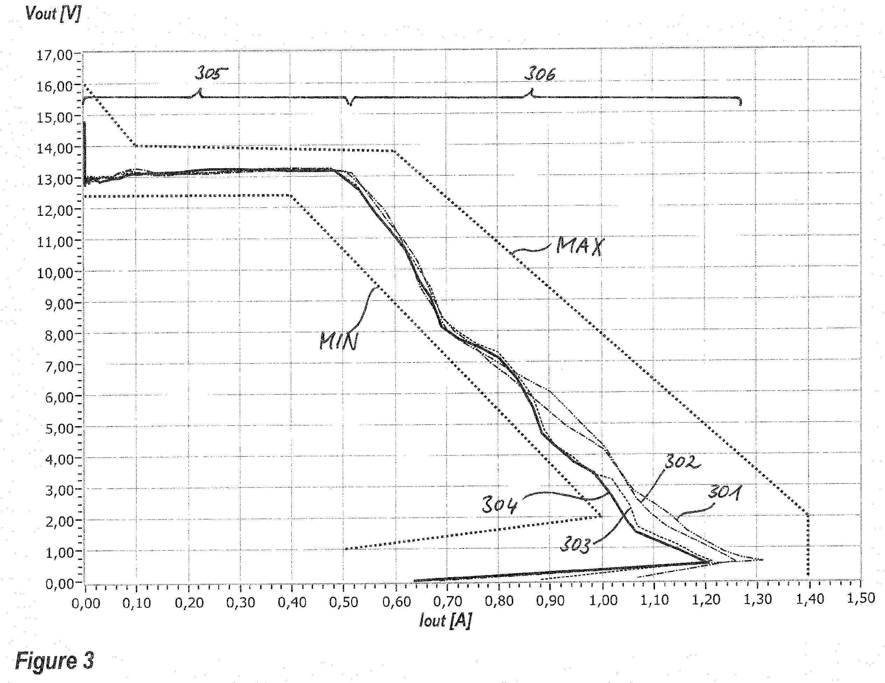

Fig. 3 shows the output characteristics that can be measured at the output terminals X100, X101 of the switchmode power supply 100 shown in Fig. 2. Analogous to Fig. 7, Fig. 3 shows the output voltage Vₒᵤₜ as a function of the output current Iₒᵤₜ for different values of the input voltage. In particular, curve 301 was measured for an input voltage of 90 V, curve 302 for an input voltage of 120 V, curve 303 for an input voltage of 230 V, and curve 304 for an input voltage of 264 V. The lower and upper margins MIN, MAX represent the same example of tolerance limits that have to be met.

As can be seen from Fig. 3, the starting point for the foldback current limiting is shifted to output voltages Vₒᵤₜ well below 1 V, typically 0.6 V.

Starting from the no-load open circuit status (Iₒᵤₜ is 0), the output voltage Vₒᵤₜ first remains at around 13 V in a voltage control mode (range 305). For current values above approximately 0.5 A the switchmode power supply operates in the current control mode (range 306). In the current control mode the primary-side switch T100 is controlled so that always a constant power is output at the output terminals. In other words, the output voltage Vₒᵤₜ is decreased with increasing output current Iₒᵤₜ.

Only when the output voltage Vₒᵤₜ reaches a threshold value of approximately 0.6 V, the primary-side switch T100 is controlled so that the output current Iₒᵤₜ decreases with increasing output voltage Vₒᵤₜ. Compared to the behavior shown in Fig. 7, this means that with the present invention a shift of the starting point for the foldback current limiting could be achieved which reduces the starting voltage to a third of the value for the conventional switchmode power supply.

Referring back to Fig. 2, according to a further aspect of the present invention, the switchmode power supply 100 comprises a supply voltage stabilizing unit 106. As mentioned above, the switchmode power supply 100 comprises a second primary-side auxiliary winding W3-4. In this auxiliary winding W3-4 a voltage pulse is induced when the primary-side switch is opened. Thus, a second auxiliary voltage can be generated that can be used as an alternative or additional supply voltage for the integrated circuit IC10 when the secondary-side output voltage Vₒᵤₜ is too low for ensuring a sufficiently stable power supply via the first primary-side auxiliary winding W3-2 (as shown in Fig. 6 for the conventional switchmode powered supply).

As shown in Fig. 2, the supply voltage stabilizing unit 106 comprises a bipolar transistor T1 which forms together with the feedback resistor R17 and the reference voltage diode D1 a linear regulator. In particular, the resistor R17 limits the current flowing through the Zener diode D1. The Zener diode D1 limits the voltage for the supply voltage of the integrated circuit IC10. The supply voltage is given by the difference of the voltage across the Zener diode D1 and the base-emitter voltage of the transistor T1. Consequently, the integrated circuit IC10 is provided with a stabilized supply voltage, which remains above the minimum required voltage for a larger range of secondary-side output voltages.

By providing such a separate and independent power supply to the integrated circuit IC10, the occurrence of an under-voltage lockout can be deferred and the supply voltage for the integrated circuit IC10 is stabilized for all load conditions and input voltage ranges.

In Fig. 2 resistors R1 and R2 are shown as "not assembled". Furthermore, it can be derived from table one that their value is 0 Ω in case they are assembled. In other words, a short circuiting bridge can be inserted at the position of these resistors. When short circuiting the transistor T1 in the supply voltage stabilizing unit 106, this is equal to a hardwired deactivation of this feature. Consequently, for application environments where the supply voltage stabilizing unit 106 according to the present invention is not needed, no different circuit board has to be provided, it is sufficient to decouple this part of the circuitry. In this case, also at the position of resistor R2 a short circuiting bridge has to be provided for decoupling the second primary-side auxiliary winding.

The following Table 1 is a list of reference numerals and circuit components (values given are exemplary only).

**TABLE 1**

| **Reference Numeral/Circuit Component** | **Description and values** |
|---|---|
| 100 | Switchmode power supply |
| 102 | Output voltage regulator unit |
| 104 | Voltage regulation deactivating unit |
| 106 | Supply voltage stabilizing unit |
| 108 | Thermal shut down unit |
| C2, C8 | 100 nF |
| C3 | 0.22 nF |
| C4, C7, C102 | 100 nF |
| C5 | 0.027 nF |
| C6 | Electrolytic capacitor 2.2 µF |
| C10B | 10 µF |
| C11 | 4.7 µF |
| C101 | 220.0 µF |
| D1 | Z diode, 15 V/0.5 W |
| D6 | Diode |
| D7 | Diode |
| D11, D12, D13, D14 | Diodes of rectifier circuit |
| D102 | Z diode |
| D103 | Diode |
| IC10 | Integrated circuit |
| L10, L11 | Choke 680 µH |
| R1 | 0 Ω (= optional short circuit) |
| R2 | 0 Ω (= optional short circuit) |
| R3 | 2 Ω |
| R4, R5 | 10 Q + fuse |
| R6 | 2 kQ |
| R7 | 49.9 kΩ |
| R8 | 118 kΩ |
| R9 | 27.4 kΩ |
| R10 | 3.34 kΩ |
| R11, R12 | 3.01 MΩ |
| R13 | 2 Ω |
| R14 | 110.00 kΩ |
| R15, R16 | 154 kΩ |
| R17 | 51.1kΩ |
| R18 | 121.00 kΩ |
| R19 | 267 kΩ |
| R20 | 1.21 kΩ |
| R21 | 0.00 Ω, max. 2.0 A |
| R22 | 11.3 kΩ |
| R23, R24 | 604 Ω |
| R25 | 0.00 Ω, max. 1 A |
| R100 | 20.00 Ω |
| R101 | 100.00 kΩ |
| T1 | NPN bipolar transistor |
| T2 | MOS FET |
| T100 | Primary-side switch, NPN bipolar transistor |
| W3 | transformer |
| W3-1 | Primary-side main winding |
| W3-2 | Primary-side first auxiliary winding |
| W3-3 | Secondary-side main winding |
| W3-4 | Primary-side second auxiliary winding |
| X10, X11 | Primary contacts |
| X100, X101 | Secondary contacts |

## Claims

1. Switchmode power supply comprising:
a transformer (W3) having a primary-side main winding (W3-1) and a secondary-side main winding (W3-3),
a primary-side switch (T100) for interrupting a primary-side current that flows through the primary-side main winding (W3-1),
a feedback unit (W3-2) which is operable to generate an auxiliary voltage that is a function of a secondary-side output voltage (Vₒᵤₜ),
a control circuit for controlling said primary-side switch (T100), the control circuit comprising an output voltage regulator unit (102) that is operable to reduce the primary-side current flow in response to a sensed value (Vₐᵤₓ) of the auxiliary voltage and to perform a foldback current limiting,
**characterized in that**
the control circuit further comprises a voltage regulation deactivating unit (104) that is connected to a voltage measurement input (U) of the output voltage regulator unit (102) and is operable to increase the sensed value (Vₐᵤₓ) of the auxiliary voltage received by the output voltage regulator unit (102), when the output voltage reaches a defined lower threshold.

2. Switchmode power supply according to claim 1, said feedback unit comprising a first primary-side auxiliary winding (W3-2) which is inductively coupled with the secondary-side main winding (W3-3) so that after opening of the primary-side switch the auxiliary voltage is induced as a function of a secondary-side output voltage (Vₒᵤₜ).

3. Switchmode power supply according to claim 2, wherein the output voltage regulator unit (102) receives the sensed value (Vₐᵤₓ) of the auxiliary voltage across a first voltage sensing resistor (R9), and wherein the voltage regulation deactivating unit (104) is connected in parallel to the first voltage sensing resistor (R9).

4. Switchmode power supply according to claim 3, wherein said first voltage sensing resistor (R9) is connected in series with a parallel connection of two voltage divider resistors (R8, R14) to form a voltage divider that is connected in parallel to the first primary-side auxiliary winding (W3-2).

5. Switchmode power supply according to one of the claims 2 to 4, wherein the voltage regulation deactivating unit comprises a second voltage sensing resistor (R22) and a first controllable switch (T2), wherein said first controllable switch (T2) is connected in series to the voltage sensing resistor (R9), and wherein a control terminal of the first controllable switch (T2) is connected to said first primary-side auxiliary winding (W3-2) for controlling the first controllable switch (T2) as a function of the secondary-side output voltage (Vₒᵤₜ).

6. Switchmode power supply according to claim 5, wherein the voltage regulation deactivating unit (104) further comprises a series connection of a second voltage divider resistor (R18) with a parallel RC-circuit (R19, C8), the series connection (R18; R19, C8) being connected in parallel with said first primary-side auxiliary winding (W3-2), and wherein the control terminal of the first controllable switch (T2) is connected to a node between the second voltage divider resistor (R18) and the parallel RC-circuit (R19, C8).

7. Switchmode power supply according to claim 5 or 6, wherein said first controllable switch (T2) comprises an MOS field effect transistor.

8. Switchmode power supply according to one of the claims 1 to 7, further comprising a second primary-side auxiliary winding (W3-4) which is inductively coupled with the secondary-side main winding (W3-3), and a supply voltage stabilizing unit (106) which is connected to said second primary-side auxiliary winding (W3-4) for providing a stabilized supply voltage to the control circuit.

9. Switchmode power supply according to claim 8, wherein said supply voltage stabilizing unit (106) comprises a bipolar transistor (T1) that is connected with a collector terminal to the second primary-side auxiliary winding (W3-4), with a base terminal to a ground potential (GNDprim), and provides at an emitter terminal the stabilized supply voltage.

10. Switchmode power supply according to claim 9, further comprising a feedback resistor (R17) connected between the collector terminal and the base terminal of said bipolar transistor (T1), wherein said base terminal is connected to ground via a reference voltage diode (D1).

11. Method to control a primary-side switch (T100) in a switchmode power supply with a transformer (W3), which has a primary-side main winding (W3-1) and a secondary-side main winding (W3-3), the method comprising the steps of:
controlling the primary-side switch (T100) to interrupt a primary-side current that flows through the primary-side main winding (W3-1),
generating an auxiliary voltage that is a function of a secondary-side output voltage (Vₒᵤₜ), sensing the auxiliary voltage on a voltage measurement input (U) of a regulator unit (102), and comparing the sensed auxiliary voltage (Vₐᵤₓ) to a voltage reference value,
performing a foldback current limiting in case the sensed auxiliary voltage (Vₐᵤₓ) falls below the voltage reference value,
**characterized in that**
when the secondary-side output voltage (Vₒᵤₜ) reaches a defined lower threshold, the auxiliary voltage, before being applied to the voltage measurement input (U) of the regulator unit (102), is increased by a voltage regulation deactivating unit (104) which is connected to the voltage measurement input (U) of the regulator unit (102), so that the regulator unit performs the foldback current limiting step at reduced values of the secondary-side output voltage (Vₒᵤₜ).

12. Method according to claim 11, wherein said feedback unit comprises at least one primary-side auxiliary winding (W3-2), in which after opening the primary-side switch (T100) an auxiliary voltage is induced as a function of a secondary-side output voltage.

13. Method according to claim 11 or 12, further comprising the step of providing a stabilized supply voltage to said regulator unit (102), the stabilized supply voltage generated from a second primary-side auxiliary winding (W3-4) which is inductively coupled with the secondary-side main winding (W3-3).

14. Method according to one of the claims 11 to 13, wherein the voltage regulation deactivating unit (104) increases the auxiliary voltage applied to the voltage measurement input (U) of the regulator unit (102) by at least a factor 3, and wherein the foldback current limiting step is performed for values of the secondary-side output voltage (Vₒᵤₜ) of less than 1 V.

15. Method according to one of the claims 11 to 14, wherein a value of a sensing resistance (R9) connected to the voltage measurement input of the regulator unit is increased when the secondary-side output voltage (Vₒᵤₜ) falls below the threshold value.

## Patentansprüche

1. Schaltnetzteil umfassend:
einen Transformator (W3) mit einer primärseitigen Hauptwicklung (W3-1) und einer sekundärseitigen Hauptwicklung (W3-3),
einen primärseitigen Schalter (T100) zum Unterbrechen eines primärseitigen Stroms, der durch die primärseitige Hauptwicklung (W3-1) fließt,
eine Rückkopplungseinheit (W3-2), die betätigt werden kann, um eine Hilfsspannung zu erzeugen, die eine Funktion einer sekundärseitigen Ausgangsspannung (Vₒᵤₜ) ist,
eine Steuerschaltung zum Steuern des primärseitigen Schalters (T100), wobei die Steuerschaltung eine Ausgangsspannungs-Reglereinheit (102) umfasst, die betätigt werden kann, um den primärseitigen Stromfluss in Reaktion auf einen erfassten Wert (Vₐᵤₓ) der Hilfsspannung zu reduzieren und um eine Foldback-Strombegrenzung auszuführen,
**dadurch gekennzeichnet, dass**
die Steuerschaltung ferner eine Spannungsregelungs-Deaktivierungseinheit (104) umfasst, die mit einem Spannungsmesseingang (U) der Ausgangsspannungs-Reglereinheit (102) verbunden ist und betätigt werden kann, um den erfassten Wert (Vₐᵤₓ) der Hilfsspannung, die von der Ausgangsspannungs-Reglereinheit (102) empfangen wird, zu erhöhen, wenn die Ausgangsspannung einen definierten unteren Schwellenwert erreicht.

2. Schaltnetzteil nach Anspruch 1, bei dem die Rückkopplungseinheit eine erste primärseitige Hilfswicklung (W3-2) aufweist, die mit der sekundärseitigen Hauptwicklung (W3-3) induktiv gekoppelt ist, so dass nach dem Öffnen des primärseitigen Schalters die Hilfsspannung in Abhängigkeit von einer sekundärseitigen Ausgangsspannung (Vₒᵤₜ) induziert wird.

3. Schaltnetzteil nach Anspruch 2, bei dem die Ausgangsspannungs-Reglereinheit (102) den erfassten Wert (Vₐᵤₓ) der Hilfsspannung über einen ersten Spannungserfassungswiderstand (R9) empfängt, und die Spannungsregelungs-Deaktivierungseinheit (104) parallel zu dem ersten Spannungserfassungswiderstand (R9) geschaltet ist.

4. Schaltnetzteil nach Anspruch 3, bei dem der erste Spannungserfassungswiderstand (R9) mit einer Parallelschaltung von zwei Spannungsteilerwiderständen (R8, R14) in Reihe geschaltet ist, um einen Spannungsteiler zu bilden, der parallel zu der ersten primärseitigen Hilfswicklung (W3-2) geschaltet ist.

5. Schaltnetzteil nach einem der Ansprüche 2 bis 4, bei dem die Spannungsregelungs-Deaktivierungseinheit einen zweiten Spannungserfassungswiderstand (R22) und einen ersten steuerbaren Schalter (T2) aufweist, wobei der erste steuerbare Schalter (T2) mit dem Spannungserfassungswiderstand (R9) in Reihe geschaltet ist, und ein Steueranschluss des ersten steuerbaren Schalters (T2) mit der ersten primärseitigen Hilfswicklung (W3-2) verbunden ist, um den ersten steuerbaren Schalter (T2) in Abhängigkeit der sekundärseitigen Ausgangsspannung (Vₒᵤₜ) zu steuern.

6. Schaltnetzteil nach Anspruch 5, bei dem die Spannungsregelungs-Deaktivierungseinheit (104) ferner eine Reihenschaltung eines zweiten Spannungsteilerwiderstands (R18) mit einer Parallel-RC-Schaltung (R19, C8) aufweist, wobei die Reihenschaltung (R18; R19, C8) parallel zu der ersten primärseitigen Hilfswicklung (W3-2) geschaltet ist und der Steueranschluss des ersten steuerbaren Schalters (T2) mit einem Knoten zwischen dem zweiten Spannungsteilerwiderstand (R18) und der parallelen RC-Schaltung (R19, C8) verbunden ist.

7. Schaltnetzteil nach Anspruch 5 oder 6, bei dem der erste steuerbare Schalter (T2) einen MOS-Feldeffekttransistor aufweist.

8. Schaltnetzteil nach einem der Ansprüche 1 bis 7, weiterhin umfassend eine zweite primärseitige Hilfswicklung (W3-4), die induktiv mit der sekundärseitigen Hauptwicklung (W3-3) gekoppelt ist, und eine Versorgungsspannung-Stabilisierungseinheit (106), die mit der zweiten primärseitigen Hilfswicklung (W3-4) verbunden ist, um der Steuerschaltung eine stabilisierte Versorgungsspannung bereitzustellen.

9. Schaltnetzteil nach Anspruch 8, bei dem die Versorgungsspannungs-Stabilisierungseinheit (106) einen Bipolartransistor (T1) aufweist, der mit einem Kollektoranschluss mit der zweiten primärseitigen Hilfswicklung (W3-4) verbunden ist und mit einem Basisanschluss mit einem Erdpotential (GNDprim) verbunden ist und an einem Emitteranschluss die stabilisierte Versorgungsspannung bereitstellt.

10. Schaltnetzteil nach Anspruch 9, weiterhin umfassend einen Rückkopplungswiderstand (R17), der zwischen den Kollektoranschluss und den Basisanschluss des Bipolartransistors (T1) geschaltet ist, wobei der Basisanschluss über eine Referenzspannungsdiode (D1) mit Erde verbunden ist.

11. Verfahren zum Steuern eines primärseitigen Schalters (T100) in einem Schaltnetzteil mit einem Transformator (W3), der eine primärseitige Hauptwicklung (W3-1) und eine sekundärseitige Hauptwicklung (W3-3) aufweist, wobei das Verfahren die folgenden Schritte umfasst:
Steuern des primärseitigen Schalters (T100) zum Unterbrechen eines primärseitigen Stroms, der durch die primärseitige Hauptwicklung (W3-1) fließt,
Erzeugen einer Hilfsspannung, die eine Funktion einer sekundärseitigen Ausgangsspannung (Vₒᵤₜ) ist, Erfassen der Hilfsspannung an einem Spannungsmesseingang (U) einer Reglereinheit (102) und Vergleichen der erfassten Hilfsspannung (Vₐᵤₓ) mit einem Spannungsreferenzwert,
Ausführen einer Foldback-Strombegrenzung für den Fall, dass die erfasste Hilfsspannung (Vₐᵤₓ) unter den Spannungsreferenzwert fällt,
**dadurch gekennzeichnet, dass**
wenn die sekundärseitige Ausgangsspannung (Vₒᵤₜ) einen definierten unteren Schwellenwert erreicht, die Hilfsspannung vor dem Anlegen an den Spannungsmesseingang (U) der Reglereinheit (102) von einer Spannungsregelungs-Deaktivierungseinheit (104) erhöht wird, die mit dem Spannungsmesseingang (U) der Reglereinheit (102) verbunden ist, so dass die Reglereinheit den Foldback-Strombegrenzungsschritt bei reduzierten Werten der sekundärseitigen Ausgangsspannung (Vₒᵤₜ) ausführt.

12. Verfahren nach Anspruch 11, bei dem die Rückkopplungseinheit wenigstens eine primärseitige Hilfswicklung (W3-2) umfasst, in der nach dem Öffnen des primärseitigen Schalters (T100) eine Hilfsspannung in Abhängigkeit von einer sekundärseitigen Ausgangsspannung induziert wird.

13. Verfahren nach Anspruch 11 oder 12, weiterhin umfassend den Schritt des Bereitstellens einer stabilisierten Versorgungsspannung für die Reglereinheit (102), wobei die stabilisierte Versorgungsspannung von einer zweiten primärseitigen Hilfswicklung (W3-4) erzeugt wird, die induktiv mit der sekundärseitigen Hauptwicklung (W3-3) gekoppelt ist.

14. Verfahren nach einem der Ansprüche 11 bis 13, bei dem die Spannungsregelungs-Deaktivierungseinheit (104) die an dem Spannungsmesseingang (U) der Reglereinheit (102) anliegende Hilfsspannung um wenigstens einen Faktor 3 erhöht, und der Foldback-Strombegrenzungsschritt für Werte der sekundärseitigen Ausgangsspannung (Vₒᵤₜ) von weniger als 1 V durchgeführt wird.

15. Verfahren nach einem der Ansprüche 11 bis 14, bei dem ein Wert eines Erfassungswiderstands (R9), der mit dem Spannungsmesseingang der Reglereinheit verbunden ist, erhöht wird, wenn die sekundärseitige Ausgangsspannung (Vₒᵤₜ) unter den Schwellenwert fällt.

## Revendications

1. Alimentation à découpage comprenant:
un transformateur (W3) ayant un enroulement principal côté primaire (W3-1) et un enroulement principal côté secondaire (W3-3),
un commutateur côté primaire (T100) pour interrompre un courant côté primaire qui circule dans l'enroulement principal côté primaire (W3-1),
une unité de rétroaction (W3-2) qui peut fonctionner pour générer une tension auxiliaire qui est fonction d'une tension de sortie côté secondaire (Vₒᵤₜ),
un circuit de commande pour commander ledit commutateur côté primaire (T100), le circuit de commande comprenant une unité de régulation de tension de sortie (102) qui est utilisable pour réduire le flux de courant côté primaire en réponse à une valeur détectée (Vₐᵤₓ) de la tension auxiliaire et pour effectuer une limitation de courant de repli,
**caractérisé en ce que**
le circuit de commande comprend en outre une unité de désactivation de régulation de tension (104) qui est connectée à une entrée de mesure de tension (U) de l'unité de régulation de tension de sortie (102) et peut être actionnée pour augmenter la valeur détectée (Vₐᵤₓ) de la tension auxiliaire reçu par l'unité de régulation de tension de sortie (102), lorsque la tension de sortie atteint un seuil inférieur défini.

2. Alimentation à découpage selon la revendication 1, ladite unité de rétroaction comprenant un premier enroulement auxiliaire côté primaire (W3-2) couplé de manière inductive à l'enroulement principal côté secondaire (W3-3) de sorte que, après l'ouverture du commutateur côté primaire, la tension auxiliaire est induite en fonction d'une tension de sortie côté secondaire (Vₒᵤₜ).

3. Alimentation à découpage selon la revendication 2, dans laquelle l'unité de régulation de tension de sortie (102) reçoit la valeur détectée (Vₐᵤₓ) de la tension auxiliaire à travers une première résistance de détection de tension (R9), et dans lequel l'unité de désactivation de régulation de tension (104) est connectée en parallèle à la première résistance de détection de tension (R9).

4. Alimentation à découpage selon la revendication 3, dans laquelle ladite première résistance de détection de tension (R9) est connectée en série avec une connexion parallèle de deux résistances de division de tension (R8, R14) pour former un diviseur de tension qui est connecté en parallèle au premier enroulement auxiliaire côté primaire (W3-2).

5. Alimentation à découpage selon l'une des revendications 2 à 4, dans laquelle l'unité de désactivation de régulation de tension comprend une seconde résistance de détection de tension (R22) et un premier commutateur pouvant être commandé (T2), dans lequel ledit premier commutateur pouvant être commandé (T2) est connecté en série à la résistance de détection de tension (R9), et dans lequel une borne de commande du premier contrôleur pouvant être commandé (T2) est connecté audit premier enroulement auxiliaire côté primaire (W3-2) pour commander le premier interrupteur pouvant être commandé (T2) en fonction de la tension de sortie côté secondaire (Vₒᵤₜ).

6. Alimentation à découpage selon la revendication 5, dans laquelle l'unité de désactivation de régulation de tension (104) comprend en outre une connexion en série d'une seconde résistance de diviseur de tension (R18) avec un circuit RC parallèle (R19, C8), la connexion série (R18, R19, C8) étant connectée en parallèle avec ledit premier enroulement auxiliaire côté primaire (W3-2), et dans lequel la borne de commande du premier commutateur pouvant être commandé (T2) est connectée à un noeud situé entre la seconde résistance de diviseur de tension (R18) et le circuit RC parallèle (R19, C8).

7. Alimentation à découpage selon les revendications 5 ou 6, dans laquelle ledit premier commutateur pouvant être commandé (T2) comprend un transistor à effet de champ MOS.

8. Alimentation à découpage selon l'une des revendications 1 à 7, comprenant en outre un second enroulement auxiliaire côté primaire (W3-4) couplé de manière inductive avec l'enroulement principal côté secondaire (W3-3), et une unité de stabilisation de tension d'alimentation (106) qui est connectée audit second enroulement auxiliaire côté primaire (W3-4) pour fournir une tension d'alimentation stabilisée au circuit de commande.

9. Alimentation à découpage selon la revendication 8, dans laquelle ladite unité de stabilisation de la tension d'alimentation (106) comprend un transistor bipolaire (T1) connecté à une borne de collecteur au niveau du second enroulement auxiliaire côté primaire (W3-4), avec une borne de base à un potentiel de masse (GNDprim), et fournit à une borne d'émetteur la tension d'alimentation stabilisée.

10. Alimentation à découpage selon la revendication 9, comprenant en outre une résistance de rétroaction (R17) connecté entre la borne collectrice et la borne de base dudit transistor bipolaire (T1), dans lequel ladite borne de base est connectée à la masse par l'intermédiaire d'une diode de tension de référence (D1).

11. Procédé pour commander un commutateur côté primaire (T100) dans une alimentation à découpage avec un transformateur (W3), qui a un enroulement principal côté primaire (W3-1) et un enroulement principal côté secondaire (W3-3), le procédé comprenant les étapes suivantes:
commander le commutateur côté primaire (T100) pour interrompre un courant côté primaire qui circule dans l'enroulement principal côté primaire (W3-1),
générer une tension auxiliaire qui est fonction d'une tension de sortie côté secondaire (Vₒᵤₜ), détecter la tension auxiliaire sur une entrée de mesure de tension (U) d'une unité de régulation (102), et comparer la tension auxiliaire détectée (Vₐᵤₓ) à une valeur de référence de tension,
effectuer une limitation de courant de repli dans le cas où la tension auxiliaire détectée (Vₐᵤₓ) tombe en dessous de la valeur de référence de tension,
**caractérisé en ce que**
lorsque la tension de sortie côté secondaire (Vₒᵤₜ) atteint un seuil inférieur défini, la tension auxiliaire, avant d'être appliquée à l'entrée de mesure de tension (U) de l'unité de régulation (102), est augmentée par une unité de désactivation de régulation de tension (104) qui est connectée à l'entrée de mesure de tension (U) de l'unité de régulation (102), de sorte que l'unité de régulation effectue l'étape de limitation de courant de repli à des valeurs réduites de la tension de sortie côté secondaire (Vₒᵤₜ).

12. Procédé selon la revendication 11, dans lequel ladite unité de rétroaction comprend au moins un enroulement auxiliaire côté primaire (W3-2), dans lequel après ouverture du commutateur côté primaire (T100), une tension auxiliaire est induite en fonction d'une tension de sortie côté secondaire.

13. Procédé selon la revendication 11 ou 12, comprenant en outre l'étape de fourniture d'une tension d'alimentation stabilisée à ladite unité de régulation (102), la tension d'alimentation stabilisée générée à partir d'un second enroulement auxiliaire côté primaire (W3-4) qui est couplé de manière inductive avec l'enroulement principal côté secondaire (W3-3).

14. Procédé selon l'une des revendications 11 à 13, dans lequel l'unité de désactivation de régulation de tension (104) augmente la tension auxiliaire appliquée à l'entrée de mesure de tension (U) de l'unité de régulation (102) d'au moins un facteur de 3, et dans lequel l'étape de limitation du courant de repli est effectuée pour des valeurs de la tension de sortie côté secondaire (Vₒᵤₜ) inférieure à 1 V.

15. Procédé selon l'une des revendications 11 à 14, dans lequel une valeur d'une résistance de détection (R9) connectée à l'entrée de mesure de tension de l'unité de régulation est augmentée lorsque la tension de sortie côté secondaire (Vₒᵤₜ) est inférieure à la valeur seuil.
